# EUROPEAN PATENT APPLICATION

(11) **EP 1 883 232 A2**
(43) Date of publication of application: **30.01.2008**
(21) Application number: 07107767.1
(22) Date of filing: 08.05.2007
(51) Int. Cl.: H04N 5/50, H04N 5/445

(54) **Broadcast receiving device and screen changing method thereof**

(30) Priority: 27.07.2006 KR 20060071039
(71) Applicant: Samsung Electronics Co., Ltd., Suwon-si 442-742 Gyeonggi-do (KR)
(72) Inventor: Kim, Bong-su, Gyeonggi-do (KR)
(74) Representative: Clark, David James

(57) **Abstract**

A method and apparatus including a broadcast receiving device and a screen changing method thereof are provided. The broadcast receiving device includes a command input part (160) which receives a channel change command to change the present channel, and a controller (190) which controls display of an image on a screen while a channel is changed according to the channel change command. Accordingly, channel change is smoothly performed.

## Description

Methods and apparatuses consistent with the present invention relate to broadcast receiving devices and screen changing methods thereof.

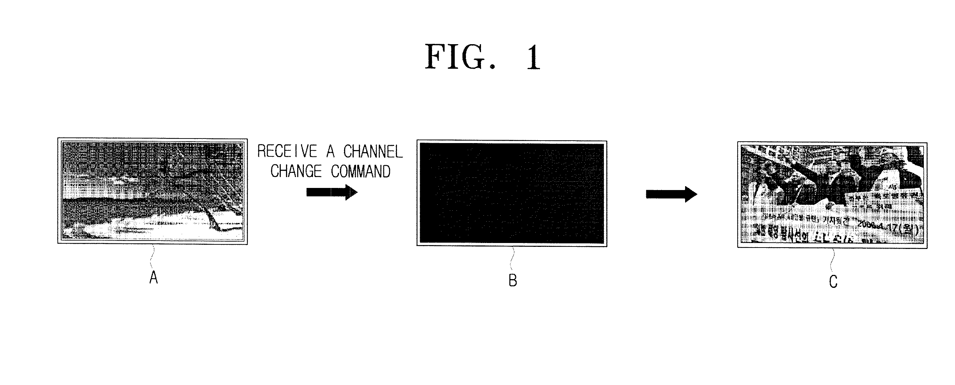

In general, when using broadcast receiving devices such as a digital television and an analog television, when a user changes a channel, a blank screen B is displayed for a certain amount of time, and then a broadcast signal C corresponding to the new channel is displayed, as shown in FIG. 1.

That is, when an image signal A corresponding to a certain channel is displayed on the screen, if the broadcast receiving device receives a channel change command to change the channel from a remote control or the broadcast receiving device by the user, the blank screen B is displayed. Then, the broadcast receiving device receives, processes and scales a broadcast signal corresponding to the new channel according to the channel change command to display an image signal C corresponding to the new channel.

During the above process, as the screen displays the blank screen B, the image output is cut and the screen flashes, causing the user's eyes to feel fatigue. This phenomenon gets more severe when the user uses the broadcast receiving device at night.

This is a big problem in broadcast receiving devices such as digital televisions which are now widely distributed. That is, as the digital television uses a display panel having intense brightness and high contrast to produce a better image quality, the blank screen B visible when changing the channel causes even more fatigue to the user's eyes.

Exemplary embodiments of the present invention aim to address the above disadvantages and other disadvantages not described above. Accordingly, an aim of example embodiments of the present invention is to smoothly change screens without displaying a blank screen when changing the channel.

According to an aspect of the present invention, a broadcast receiving device comprises a command input part which receives a channel change command to change the present channel, and a controller which controls to display an image on a screen while a channel is changed according to the channel change command.

Suitably, if the channel change command is input, the controller stops an image signal corresponding to the present channel, displays the image signal corresponding to the present channel simultaneously with an image signal corresponding to the image, and reduces the brightness and the contrast of the image signal corresponding to the present channel and increases the brightness and the contrast of the image signal corresponding to the image.

Suitably, if channel change according to the channel change command is complete, the controller overlaps the image signal corresponding to the image with an image signal corresponding to the new channel, and reduces the brightness and the contrast of the image signal corresponding to the image and increases the brightness and the contrast of the image signal corresponding to the new channel.

The broadcast receiving device may further comprise a memory which stores the image signal corresponding to the image, wherein the image signal corresponding to the image is an image signal corresponding to one of a still image and a moving image.

The image may be one of a still image and a moving image having more than two colors.

The image may be one of an image for a maker of the broadcast receiving device, an advertising image transmitted from a broadcasting station, and a preferred image of a user who uses the broadcast receiving device.

The broadcast receiving device may further comprise an interface which receives the image signal corresponding to the image from an external device.

The broadcast receiving device may further comprise a tuner which receives a broadcast signal including the image signal corresponding to the image, a decoder which decodes the broadcast signal, and a scaler which scales the image signal corresponding to the image in the broadcast signal.

The broadcast receiving device may further comprise a display which displays the image signal corresponding to the image.

The broadcast receiving device may further comprise an image quality enhancer which removes noise in the image signal, wherein if channel change according to the channel change command is complete, the controller controls the image quality enhancer to remove noise in the image signal corresponding to the new channel and display the image signal corresponding to the new channel on the display.

Another aspect the present invention provides a channel change method comprising: receiving a channel change command to change a present channel, and displaying an image on a screen while a channel is changed according to the channel change command.

Suitably, while displaying the image, if the channel change command is input, an image signal corresponding to the present channel is stopped, the image signal corresponding to the present channel is displayed simultaneously with an image signal corresponding to the image, and the brightness and the contrast of the image signal corresponding to the present channel decrease and the brightness and the contrast of the image signal corresponding to the image increase.

Suitably, if channel change according to the channel change command is completed, the method may further comprise overlapping the image signal corresponding to the image with an image signal corresponding to the new channel, and reducing the brightness and the contrast of the image signal corresponding to the image and increasing the brightness and the contrast of the image signal corresponding to the new channel.

The method may further comprise storing the image signal corresponding to the image, wherein the image signal corresponding to the image is an image signal corresponding to one of a still image and a moving image.

The method may further comprise receiving the image signal corresponding to the image from an external device.

The method may further comprise receiving a broadcast signal including the image signal corresponding to the image, decoding the broadcast signal, and scaling the image signal corresponding to the image in the broadcast signal.

Suitably, if channel change according to the channel change command is complete, the method may further comprise removing noise in the image signal corresponding to the new channel and displaying the image signal corresponding to the new channel.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a view showing a screen changing method in a related art broadcast receiving device;
FIG. 2 is a block diagram schematically showing the configuration of a broadcast receiving device according to an exemplary embodiment of the present invention;
**FIGS. 3A** and **3B** show the screen change process of the broadcast receiving device according to an exemplary embodiment of the present invention; and
FIG. 4 is a flow chart showing the screen changing method of the broadcast receiving device according to an exemplary embodiment of the present invention.

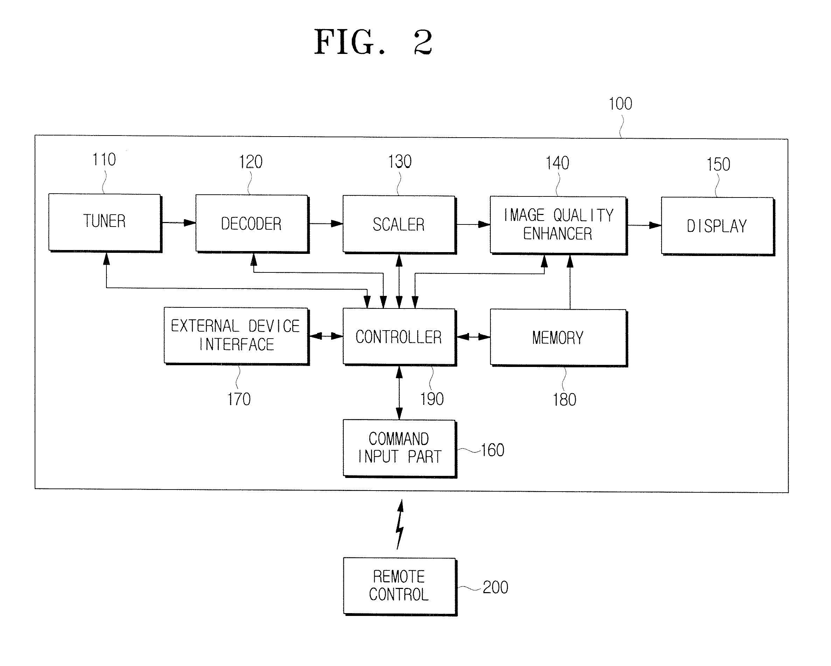

FIG. 2 is a block diagram schematically showing the configuration of a broadcast receiving device according to an exemplary embodiment of the present invention.

In FIG. 2, the broadcast receiving device 100 comprises a tuner 110, a decoder 120, a scaler 130, an image quality enhancer 140, a display 150, a command input part 160, an external device interface 170, a memory 180 and a controller 190.

The tuner 110 tunes and receives a broadcast signal corresponding to a selected channel among the broadcast signals, and changes the broadcast signal from a radio frequency (RF) type into an image signal and a sound signal of an intermediate frequency (IF) type.

The decoder 120 decodes the image signal and sound signal output from the tuner 110. The sound signal decoded in the decoder 120 is signal-processed in a sound processor (not shown) and output through a speaker (not shown). The scaler 130 scales the image signal output from the decoder 120 to an image of a size supportable by the broadcast receiving device 100.

The image quality enhancer 140 processes and outputs the image signal to enhance the image quality, such as removing noise included in the scaled image signal.

The display 150 receives the image signal noise-removed in the image quality enhancer 140, and displays the image signal, and may be implemented as a cathode ray tube (CRT), a liquid crystal display (LCD), a plasma display panel (PDP), a digital micro-mirror display (DMD), or the like.

The command input part 160 receives a user command from a remote control 200 and transmits the command to the controller 190, or transmits a use command, input through operation keys (not shown) formed on the command input part 160, to the controller 190. The user can input a channel change command through the command input part 160 to change the present viewing channel to another channel.

The external device interface 170 has a variety of input terminals to input image signals and sound signals from external devices such as digital versatile disk (DVD) players, video cassette recorders (VCRs), or external devices such as portable storage devices which store the user's preferred images.

The memory 180 stores a motion image and a still image to output on the display 150 at the time of changing the channel, and the moving image and the still image have more than two colors. That is, the memory 180 stores an image for the maker of the broadcast receiving device 100, the user's preferred image input through the external device interface 170, or an advertising image included in the broadcast signal transmitted from the broadcasting station.

The memory 180 storing such images may be incorporated as a memory formed in the decoder 120, a memory formed in the scaler 130 or a memory formed in the image quality enhancer 140 for removing noise.

The controller 190 controls the tuner 110, the decoder 120, the scaler 130 and the image quality enhancer 140 to decode, scale and display the received broadcast signal corresponding to the present channel. While the image signal corresponding to the present channel is displayed on the screen, if the user inputs a channel change command through the command input part 160, the controller 190 controls the image quality enhancer 140 so that the image signal corresponding to the present channel is not displayed and the image stored in the memory 180 is displayed.

Alternatively, the controller 190 controls the image quality enhancer 140 so that the image signal corresponding to the present channel is stopped and overlapped with the image signal corresponding to the stored image. At this time, the controller 190 gradually reduces the brightness and contrast of the image signal corresponding to the present channel and to the contrary, gradually increases the brightness and contrast of the image signal corresponding to the stored image, so that the image signal corresponding to the present channel is naturally changed and displayed to the image signal corresponding to the stored image.

Subsequently, if the channel change is completed, that is, a broadcast signal corresponding to the new channel is received, decoded, and scaled, the controller 190 controls the image quality enhancer 140 so that the stored image is not shown and the image signal corresponding to the new channel is displayed.

Alternatively, if the channel change is completed, the controller 190 controls the image quality enhancer 140 to overlap the image signal corresponding to the stored image with the image signal corresponding to the new channel. At this time, the controller 190 gradually reduces the brightness and contrast of the image signal corresponding to the stored image and instead gradually increases the brightness and contrast of the image signal corresponding to the new channel, so that the image signal corresponding to the stored image is naturally changed and displayed to the image signal corresponding to the new channel.

The controller 190 stores the user's preferred image, input through the external device interface 170 according to the user's command input through the command input part 160, in the memory 180. Moreover, the controller 190 stores the advertising image, included in the broadcast signal transmitted from the broadcasting station, in the memory 180. The preferred image and advertising image may be changed if necessary and stored in the memory 180. The image for the maker of the broadcast receiving device 100 is stored in the memory 180 when manufacturing the broadcast receiving device 100, and a memory formed in the chip to be used to enhance the image quality is used as the memory 180.

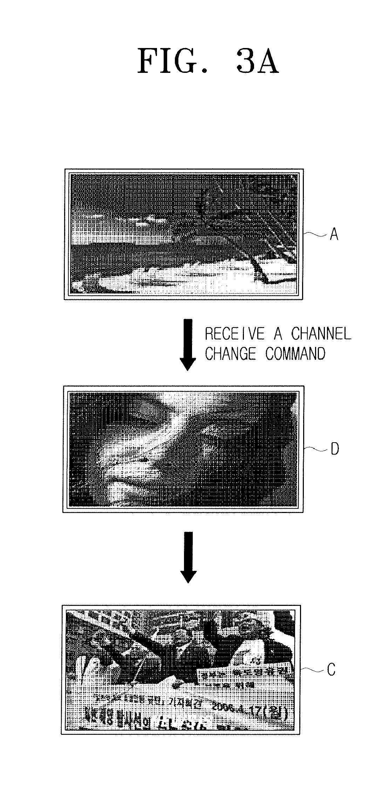

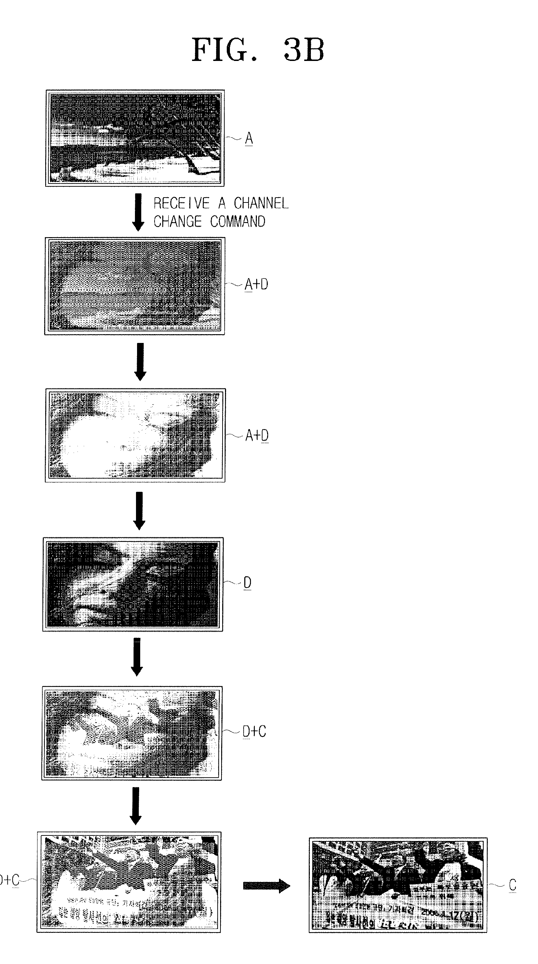

**FIGS. 3A** and **3B** show a screen change process of a broadcast receiving device according to an exemplary embodiment of the present invention.

In FIG. 3A, as soon as a channel change command is input, an image signal A corresponding to the present channel is changed to display an image signal D corresponding to the stored image. Subsequently, as soon as the channel change is completed, the image signal D corresponding to the stored image changes to the image signal C corresponding to the new channel.

In FIG. 3B, as soon as a channel change command is input, an image signal A corresponding to the present channel is stopped, the brightness and contrast of the image signal A decrease, and the brightness and contrast of the image signal D corresponding to the stored image increase, so that the two images are displayed simultaneously as A+D. Then, if the brightness and contrast of the image signal D corresponding to the stored image reach set values, the image signal A corresponding to the present channel disappears completely. The set values may be the preset brightness and contrast of the broadcast receiving device 100.

As soon as the channel change is completed, the brightness and contrast of the image signal D corresponding to the stored image decrease and the brightness and contrast of the image signal C corresponding to the new channel increase, so that the two images are displayed simultaneously as D+C. Then, if the brightness and contrast of the image signal C corresponding to the new channel reach set values, the image signal D corresponding to the stored image disappears completely. The set values include the preset brightness and contrast of the broadcast receiving device 100.

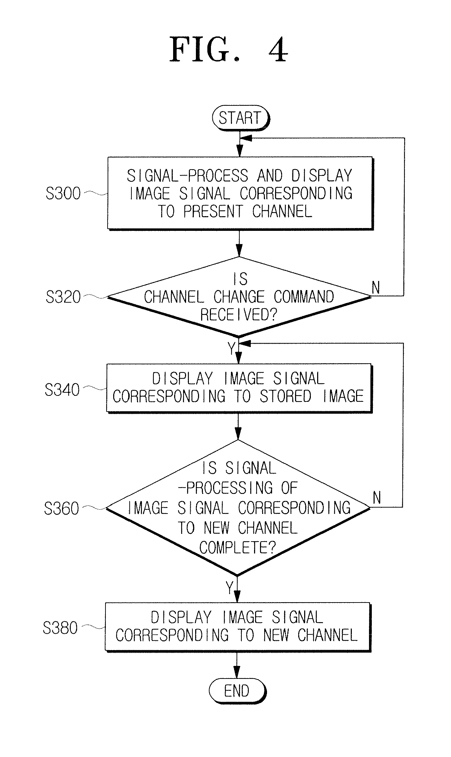

FIG. 4 is a flow chart showing a screen changing method of the broadcast receiving device according to an exemplary embodiment of the present invention.

In FIG. 4, an image signal corresponding to the present channel is first signal-processed and displayed on the screen (operation S300). That is, the controller 190 controls the tuner 110, the decoder 120, the scaler 130 and the image quality enhancer 140 to decode, scale and display the received broadcast signal corresponding to the present channel.

If a channel change command is input through the command input part 160 (operation S320), the controller 190 controls the image quality enhancer 140 to display an image signal corresponding to the stored image (operation S340). That is, as soon as the channel change command is input, the image corresponding to the present channel is changed to the image signal corresponding to the stored image.

Alternatively, as soon as the channel change command is input, the image signal corresponding to the present channel is displayed simultaneously with the image signal corresponding to the stored image. The brightness and contrast of the image signal corresponding to the present channel decrease gradually, and the brightness and contrast of the image signal corresponding to the stored image increase gradually, so that the screen is naturally changed.

If an image signal corresponding to the new channel is completely signal-processed (S360), the image signal corresponding to the new channel is displayed on the screen (S380). That is, if the channel change is complete, the image signal corresponding to the stored image is changed to the image signal corresponding to the new channel.

Alternatively, as soon as the channel change is completed, the image signal corresponding to the stored image is displayed simultaneously with the image signal corresponding to the stored image. The brightness and contrast of the image signal corresponding to the stored image decrease gradually, and the brightness and contrast of the image signal corresponding to the new channel increase gradually, so that the screen is naturally changed.

According to the above process, the screen change of the broadcast receiving device 100 may be performed.

As can be appreciated from the above description, when changing the channel, a blank screen is not shown and the stored image is displayed to smoothly change the screen. Additionally, an advertising image may be displayed to gain the benefits of advertising. Furthermore, an image may be changed and displayed according to personal preferences to increase the user's convenience.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving device comprising:
a command input part (160) which is operable to receive a channel change command to change a present channel; and
a controller (190) which is operable to control display of an image on a display (150) while a channel is changed according to a received channel change command.

2. The broadcast receiving device of claim 1, wherein if a channel change command is input, the controller is arranged to stop an image signal corresponding to the present channel, displays the image signal corresponding to the present channel simultaneously with an image signal corresponding to the image, and reduce a brightness and a contrast of the image signal corresponding to the present channel and increases a brightness and a contrast of the image signal corresponding to the image.

3. The broadcast receiving device of claim 2, wherein if a channel change according to the channel change command is complete, the controller is arranged to overlap the image signal corresponding to the image with an image signal corresponding to the new channel, and reduces the brightness and the contrast of the image signal corresponding to the image and increases a brightness and a contrast of the image signal corresponding to the new channel.

4. The broadcast receiving device of claim 1, 2 or 3, further comprising a memory (180) which stores the image signal corresponding to the image,
wherein the image signal corresponding to the image is an image signal corresponding to at least one of a still image and a moving image.

5. The broadcast receiving device of claim 1, 2, 3 or 4, wherein the image is at least one of a still image and a moving image having more than two colors.

6. The broadcast receiving device of any preceding claim, wherein the image is one of an image for a maker of the broadcast receiving device, an advertising image transmitted from a broadcasting station, and a preferred image of a user who uses the broadcast receiving device.

7. The broadcast receiving device of any preceding claim, further comprising an interface (170) which receives an image signal corresponding to the image from an external device.

8. The broadcast receiving device of any preceding claim 1, further comprising:
a tuner (110) which is operable to receive a broadcast signal including an image signal corresponding to the image;
a decoder (120) which is operable to decode the broadcast signal; and
a scaler (130) which scale is operable to the image signal corresponding to the image in the broadcast signal.

9. The broadcast receiving device of any preceding claim, further comprising a display (150) which displays an image signal corresponding to the image.

10. The broadcast receiving device of any preceding claim, further comprising an image quality enhancer (140) which is operable to remove noise in an image signal corresponding to a new channel,
wherein if a channel change according to the channel change command is complete, the controller (190) is arranged to control the image quality enhancer (140) to remove noise in the image signal corresponding to the new channel and display the image signal corresponding to the new channel on the display.

11. A channel change method, comprising:
receiving a channel change command to change a present channel (S320); and
displaying an image on a display (S340) while a channel is changed according to the channel change command.

12. The method of claim 11, wherein while displaying the image, if the channel change command is input, an image signal corresponding to the present channel is displayed simultaneously with an image signal corresponding to the image, and a brightness and a contrast of the image signal corresponding to the present channel decrease and a brightness and a contrast of the image signal corresponding to the image increase.

13. The method of claim 11 or 12, wherein if a channel change according to the channel change command is completed, further comprising overlapping the image signal corresponding to the image with an image signal corresponding to a new channel, and reducing the brightness and the contrast of the image signal corresponding to the image and increasing a brightness and a contrast of an image signal corresponding to the new channel.

14. The method of claim 11, 12 or 13, further comprising storing the image signal corresponding to the image,
wherein the image signal corresponding to the image is an image signal corresponding to at least one of a still image and a moving image.

15. The method of any one of claims 11-14, wherein the image is at least one of a still image and a moving image having more than two colors.

16. The method of any one of claims 11-15, wherein the image is at least one of an image for a maker of the broadcast receiving device, an advertising image transmitted from a broadcasting station, and a preferred image of a user who uses the broadcast receiving device.

17. The method of any one of claims 11-16, further comprising receiving an image signal corresponding to the image from an external device.

18. The method of any one of claims 11-17, further comprising:
receiving a broadcast signal including an image signal corresponding to the image;
decoding the broadcast signal; and
scaling the image signal corresponding to the image in the broadcast signal.

19. The method of any one of claims 11-18, if channel change according to the channel change command is complete, further comprising removing noise in an image signal corresponding to a new channel and displaying the image signal corresponding to the new channel.

20. The method of any one of claims 11-19, wherein the displaying comprises changing from displaying a present image corresponding to the present channel to the image before a channel change is complete.
